# EUROPEAN PATENT SPECIFICATION

(11) **EP 4 117 571 B1**
(45) Date of publication and mention of the grant of the patent: **15.10.2025**
(21) Application number: 21712964.2
(22) Date of filing: 03.03.2021
(51) Int. Cl.: A61C 3/02, A61C 3/06, A61C 5/70, A61C 13/00

(54) **MANUFACTURE OF A DENTAL PROSTHESIS**
HERSTELLUNG EINER ZAHNPROTHESE
FABRICATION D'UNE PROTHÈSE DENTAIRE

(30) Priority: 10.03.2020 GB 202003430
(43) Date of publication of application: 18.01.2023
(73) Proprietor: Prima Healthcare Group Limited, Gloucester, Gloucestershire GL2 2HA (GB)
(72) Inventor: GOH, Wan Tsin, Gloucester, Gloucestershire GL2 2HA (GB)
(74) Representative: Bazant-Hegemark, Florian
(86) International application number: PCT/EP2021/055283
(87) International publication number: WO 2021/180530

(56) References cited:
- GB-A- 2 573 524
- GB-A- 2 573 524
- US-A- 5 685 671
- US-A- 5 685 671
- US-A1- 2009 275 000
- US-A1- 2009 275 000
- US-A1- 2012 177 456
- US-A1- 2012 177 456
- US-A1- 2012 219 930
- US-A1- 2012 219 930

## Description

This invention relates to a method of manufacture of a dental prosthesis such as a single crown, a small unit bridge or the like, and in particular to a method of manufacture of such a prosthesis where the prosthesis is of a ceramic material, for example a glass ceramic material. The use of dental prostheses attached to dental implants to fill spaces resulting from the loss or extraction of teeth is well known. Similarly, the use of prostheses such as crowns, bridges and veneers that, in use, are attached to other teeth or parts thereof is well known. Such prostheses are manufactured from a range of materials. One class of material that is in use is ceramic materials including glass ceramic materials. Typically, in order to form a dental prosthesis from a glass ceramic material, a block of the glass ceramic material is ground to a desired shape using a rotary grinding tool, typically electroplated or brazed with a diamond grit material or the like in order to result in the tool being of a sufficient hardness to allow it to remove hard ceramic material from the block. The rotary grinding tool typically takes the form of a generally cylindrical element that is rotated, in use, about its axis, and it is the cylindrical peripheral surface of the tool, and the head thereof, that engages the ceramic material and which serves to grind or wear away the ceramic material.

Whilst the use of such a tool in the manufacture of a dental prosthesis of a glass ceramic material works adequately, as the side, cylindrical face of the tool, as well as the head thereof, is used to machine the ceramic block, it has been found that bending of the tool may occur, in use. Also, the diamond grit material or the like may separate from the tool, restricting the working life of the tool. The material removed from the block typically forms a dust or powder that may clog the tool, reducing its effectiveness. Also, the grinding process is typically relatively slow, limiting production efficiency.

US 2012/0219930 A1 is concerned with machining dental ceramic materials, and avoids the treatment of a sintered ceramic material by using a lithium metasilicate material to be shaped to a desired shape before hardening the shaped lithium metasilicate in a sintering step. GB2573524A discloses a tool is for milling dental materials, such as zirconia, in a pre-sintered

state for the manufacture of dental prostheses.

US 2012/177456 A1 discloses the milling of a partially sintered ceramic block. Both documents require a last sintering step for a fully sintered dental prosthesis.

Despite the disadvantages associated with grinding of glass ceramic materials, the use of other techniques to shape such materials has not been explored, in part due to a perception that grinding is the only technique suitable for use with materials of such a hardness.

A number of arrangements are known in which ceramic materials are drilled or milled in their green stage, prior to undertaking a sintering operation thereon. However, after sintering, the glass ceramic materials are generally considered to be too hard to allow drilling or milling thereof in a controlled fashion.

It is an object of the invention to provide a method of manufacture of a dental prosthesis in which as least some of the disadvantages associated with known arrangements are overcome or are of reduced effect.

According to the present invention there is provided a method of manufacture of a dental prosthesis, as defined in claim 1, comprising using a rotary mill or drill tool having a cutting face to mill or drill a block of a sintered ceramic material, cutting material therefrom, to form the block to a desired shape. The invention thus uses milling or drilling, as opposed to grinding, in the shaping of a block of a sintered ceramic material, the milling or drilling operation resulting in material being cut from the block, as compared to the known techniques in which material is ground therefrom. Such a technique is quicker than grinding, and the use of milling or drilling techniques to cut material from the block is advantageous in that many of the above described disadvantages associated with the use of grinding techniques are overcome or are of reduced effect.

The sintered ceramic material is conveniently of a glass ceramic and preferably comprises lithium disilicate or lithium silicate.

The rotary tool may be of ball-nosed form, for example. Alternatively, it may be of bull-nosed shape, or of flat ended form. Where the tool takes the form of a drill tool, it may be of pointed form, for example. It will be appreciated that these represent merely examples of shapes of tools that may be employed in the method of the invention, and that the invention is not restricted in this regard. The shape of tool used may depend, at least in part, upon the application in which the method is used and the shape to be achieved.

The method could involve using a first, relatively large radius of curvature milling tool to form the block to the general shape required, and a second, smaller radius of curvature milling tool to perform a finishing operation, if desired. However, this need not be the case, and the shaping of the block may be achieved using a single tool, if desired.

The ceramic material is, as mentioned above, preferably a glass ceramic material. It may comprise, for example, a lithium silicate or lithium disilicate material as mentioned above. Some suitable materials include IPS e.max CAD (RTM) from Ivoclar, Celtra Duo (RTM) from Dentsply or VITA SUPRINITY (RTM) from Vita. It will be appreciated that these are merely examples of materials with which the invention may be employed, and that the method of the invention may be used with other ceramic materials.

The rotary mill or drill tool is preferably provided with a hard coating. By way of example, a diamond coating may be applied to the outer surface of at least the end part thereof. However, other hard material coatings may be used without departing from the scope of the invention. It is envisaged that the tool will be of diamond coated cemented carbide or cermet form, but other materials could be used. PCD, PCBN or CBN may be brazed to the surface of the tool. Alternatively, it may be of sintered form, sintered from a material including PCD, PCBN and/or CBN elements. Again, it will be appreciated that the invention is not restricted in this regard, and other materials could be used. The grinding tools typically used in shaping ceramic materials by grinding, as opposed to by milling or drilling are usually of steel form, although some are of carbide form.

The invention will further be described, by way of example, with reference to the accompanying drawings, in which:
Figure 1 is a diagrammatic view illustrating the manufacture of a dental prosthesis in accordance with an embodiment of the invention; and
Figure 2 is a view illustrating the milling tool used in the manufacturing method of Figure 1.

Referring to the accompanying drawings, a method of manufacture of a dental prosthesis 10 comprises the steps of supporting a block 12 of a sintered ceramic material, for example a glass ceramic material for milling or drilling. By way of example, the sintered glass ceramic material block may be of lithium silicate or lithium disilicate. Materials that may be used include IPS e.max CAD (RTM) from Ivoclar, Celtra Duo (RTM) from Dentsply or VITA SUPRINITY (RTM) from Vita. The block 12 of sintered glass ceramic material is support within a machining apparatus 14 such as a five axis machining apparatus. The machining apparatus 14 includes a rotary milling tool 16 that is supported in such a manner as to allow the tool 16 to be rotated at high speed about its axis. The block 12 is supported by a support arrangement 18. The machine 14 is controlled in such a manner that the tool 16 can be moved in at least three perpendicular directions relative to the block 12 in a controlled fashion. By way of example, it may comprise a 3-axis machine, but it could comprise, for example, a 5- or 6-axis machine. Furthermore, the manner in which the block 12 is supported is such that controlled tilting of the block 12 relative to the tool 16 is permitted.

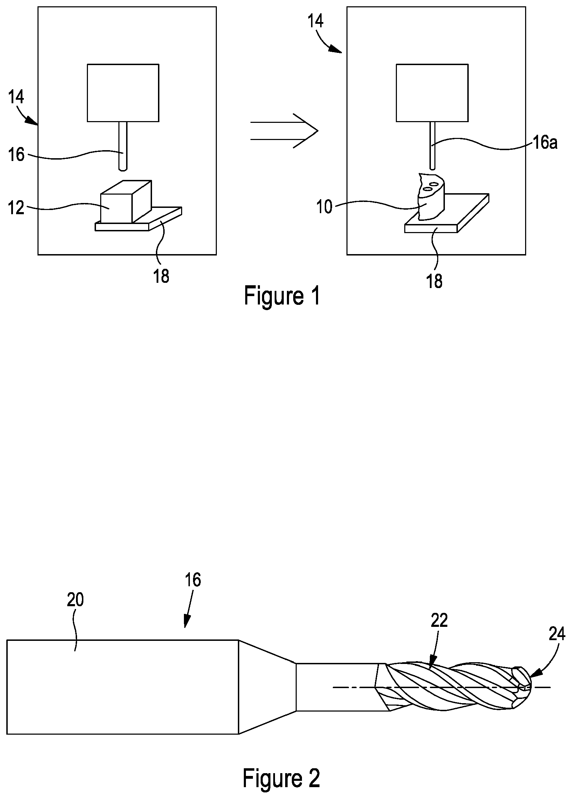

As shown in Figure 2, the tool comprises a shank 20 adapted to be fitted to a chuck forming part of the apparatus 12. From the shank 20 extends a fluted shaft 22. The free end of the fluted shaft 22 is, in this example, of ball-nosed form and serves to define a cutting face 24 which, upon engagement with the block 12, can serve to cut or mill material from the block 12. As sintered ceramic materials are typically of high hardness, the tool 16 is conveniently of tungsten carbide or silicon carbide or another suitable hard material such as cermet, and it may have a diamond material coating applied thereto to enhance the ability of the tool to cut or mill ceramic materials. The diamond coating may be applied to the entire tool 16, or just to the parts thereof that, in use, engage and cut or mill the block 12. The tool 16 could be brazed with a hard material such as PCD, PCBN or CBN or could be of dual material form, for example of sintered form from a material incorporating PCD, PCBN and/or CBN and carbide so that PCD, PCBN and/or CBN material elements are encapsulated within the carbide material.

It will be appreciated that with the block 12 supported in the manner outlined hereinbefore, and with the tool 16 driven for rotation, the tool 16 and/or the block 12 can be moved such that a part of the tool 16 moves into engagement with the block 12. The engagement between the block 12 and the cutting face 24 of the tool 16 results in the tool 16 serving to cut or mill material from the block 12. By moving and/or tilting the tool 16 and/or the block 12, it will be appreciated that over time the block 12 can be formed to substantially the desired shape.

After milling of the block 12 to approximately the desired shape, the tool 16 may be replaced with a tool 16a of substantially the same form as the originally used tool 16, but of smaller diameter and with a ball nosed end part of a smaller radius of curvature. By repeating the above described milling process using the smaller diameter tool 16a, it will be appreciated that a finishing process may be performed, finishing the prosthesis 10 to a desired shape.

It will be appreciated that through the use of a milling tool to cut material from the block by milling or drilling, rather than a rotary grinding tool to grind material therefrom, a prosthesis can be manufactured without suffering from the disadvantages associated with the use of grinding tools as outlined hereinbefore. The invention thus uses milling or drilling, as opposed to grinding, in the shaping of a block of a sintered ceramic material, such a technique being quicker than grinding.

Whilst in the description hereinbefore, reference is made to using a second tool of smaller dimensions in undertaking a finishing operation, it will be appreciated that this represents merely one example, and that this may not always be required. By way of example, the entire process may be undertaken using a single tool.

Although the description hereinbefore is of the use of a milling tool of ball-nosed form, the invention is not restricted in this regard and tools of other shapes and forms may be used. By way of example, where the tool is a rotary milling tool, it could be of flat ended or bull-nosed form, if desired. Alternatively, the tool could comprise a rotary drilling tool, for example of pointed form.

Whilst a specific embodiment of the invention is described hereinbefore, it will be appreciated that a wide range of modifications and alterations may be made thereto without departing from the scope of the invention as defined by the appended claims.

## Claims

1. A method of manufacture of a dental prosthesis (10) comprising using a fluted rotary milling or drilling tool (16) to mill or drill a block (12) of a sintered ceramic material to cut material therefrom, the method using a support arrangement (18) to support a block (12) such that controlled tilting of the block (12) relative to the tool (16) is permitted, and, with the tool (16) driven for rotation, moving the tool (16) and/or the block (12) such that a part of the tool (16) moves into engagement with the block (12), thereby to allow a cutting face (24) of the tool (16) to cut or mill material from the block (12) to approximately a desired shape, and, further, using a tool in a finishing operation to finish the prosthesis (10) to a desired shape.

2. The method according to claim 1, wherein a single tool is used as the tool used for milling or drilling to cut material, and in the finishing operation.

3. The method according to claim 1, comprising, prior to the finishing operation, replacing the milling or drilling tool (16), respectively, with a smaller diameter tool (16a), and using the smaller diameter tool (16a) to perform the finishing operation.

4. A method according to any one of the preceding claims, wherein the sintered ceramic material is a sintered glass ceramic material.

5. A method according to Claim 4, wherein the sintered glass ceramic material comprises lithium disilicate or lithium silicate.

6. A method according to any of the preceding claims, wherein the tool (16) is a milling tool of ball-nosed, bull-nosed or flat ended form.

7. A method according to any one of claims 1 to 5, wherein the tool (16) is a drilling tool.

8. A method according to any of the preceding claims, wherein the tool is provided with a hard coating.

9. A method according to Claim 8, wherein a diamond coating is applied to the outer surface of at least the end part of the tool (16).

10. A method according to any of the preceding claims, wherein the tool (16) incorporates PCD (polycrystalline diamond), PCBN (polycrystalline cubic boron nitride) and/or CBN (cubic boron nitride) elements.

## Patentansprüche

1. Verfahren zur Herstellung einer Zahnprothese (10), umfassend Verwenden eines gerillten Drehfräs- oder Bohrwerkzeugs (16) zum Fräsen oder Bohren eines Blocks (12) aus einem gesinterten Keramikmaterial, um Material daraus zu schneiden, wobei das Verfahren eine Stützanordnung (18) zum Stützen eines Blocks (12) verwendet, sodass ein gesteuertes Kippen des Blocks (12) bezogen auf das Werkzeug (16) zugelassen wird, und wobei das Werkzeug (16) zur Drehung angetrieben wird, wodurch das Werkzeug (16) und/oder der Block (12) derart bewegt werden/wird, dass sich ein Teil des Werkzeugs (16) in Eingriff mit dem Block (12) bewegt, um dadurch zu ermöglichen, dass eine Schneidfläche (24) des Werkzeugs (16) Material von dem Block (12) in ungefähr eine gewünschte Form schneidet oder fräst, und ferner ein Werkzeug in einem Endbearbeitungsvorgang verwendet, um die Prothese (10) in eine gewünschte Form endzubearbeiten.

2. Verfahren nach Anspruch 1, wobei ein einziges Werkzeug als das Werkzeug verwendet wird, das zum Fräsen oder Bohren, um Material zu schneiden, und in dem Endbearbeitungsvorgang verwendet wird.

3. Verfahren nach Anspruch 1, umfassend, vor dem Endbearbeitungsvorgang, Ersetzen des Fräs- bzw. Bohrwerkzeugs (16) durch ein Werkzeug (16a) mit kleinerem Durchmesser und Verwenden des Werkzeugs (16a) mit kleinerem Durchmesser, um den Endbearbeitungsvorgang durchzuführen.

4. Verfahren nach einem der vorhergehenden Ansprüche, wobei das gesinterte Keramikmaterial ein gesintertes Glaskeramikmaterial ist.

5. Verfahren nach Anspruch 4, wobei das gesinterte Glaskeramikmaterial Lithiumdisilikat oder Lithiumsilikat umfasst.

6. Verfahren nach einem der vorhergehenden Ansprüche, wobei das Werkzeug (16) ein Fräswerkzeug mit Kugelspitze, abgerundeter Spitze oder flachem Ende ist.

7. Verfahren nach einem der Ansprüche 1 bis 5, wobei das Werkzeug (16) ein Bohrwerkzeug ist.

8. Verfahren nach einem der vorhergehenden Ansprüche, wobei das Werkzeug mit einer harten Beschichtung bereitgestellt ist.

9. Verfahren nach Anspruch 8, wobei eine Diamantbeschichtung auf die Außenfläche von mindestens dem Endteil des Werkzeugs (16) aufgebracht wird.

10. Verfahren nach einem der vorhergehenden Ansprüche, wobei das Werkzeug (16) Elemente aus PCD (polykristallinem Diamant), PCBN (polykristallinem kubischem Bornitrid) und/oder CBN (kubischem Bornitrid) integriert hat.

## Revendications

1. Procédé de fabrication d'une prothèse dentaire (10) comprenant l'utilisation d'un outil de fraisage ou de perçage rotatif cannelé (16) pour fraiser ou percer un bloc (12) d'un matériau céramique fritté afin de découper un matériau à partir de celui-ci, le procédé utilisant un agencement support (18) destiné à supporter un bloc (12) de sorte qu'un basculement contrôlé du bloc (12) par rapport à l'outil (16) soit permis, et, avec l'outil (16) entraîné en rotation, déplacer l'outil (16) et/ou le bloc (12) de sorte qu'une partie de l'outil (16) se déplace en prise avec le bloc (12), ce qui permet à une face de coupe (24) de l'outil (16) de couper ou fraiser le matériau à partir du bloc (12) jusqu'à approximativement une forme souhaitée, et, en outre, utiliser un outil dans une opération de finition pour finir la prothèse (10) jusqu'à une forme souhaitée.

2. Procédé selon la revendication 1, un seul outil étant utilisé en tant qu'outil utilisé pour le fraisage ou le perçage afin de couper un matériau, et lors de l'opération de finition.

3. Procédé selon la revendication 1, comprenant, avant l'opération de finition, le remplacement de l'outil de fraisage ou de perçage (16), respectivement, par un outil de plus petit diamètre (16a), et l'utilisation de l'outil de plus petit diamètre (16a) pour effectuer l'opération de finition.

4. Procédé selon l'une quelconque des revendications précédentes, ledit matériau céramique fritté étant un matériau vitrocéramique fritté.

5. Procédé selon la revendication 4, ledit matériau vitrocéramique fritté comprenant du disilicate de lithium ou du silicate de lithium.

6. Procédé selon l'une quelconque des revendications précédentes, ledit outil (16) étant un outil de fraisage de forme de tête sphérique, de tête arrondie ou d'extrémité plate.

7. Procédé selon l'une quelconque des revendications 1 à 5, ledit outil (16) étant un outil de perçage.

8. Procédé selon l'une quelconque des revendications précédentes, ledit outil étant doté d'un revêtement dur.

9. Procédé selon la revendication 8, un revêtement en diamant étant appliqué sur la surface externe d'au moins la partie d'extrémité de l'outil (16).

10. Procédé selon l'une quelconque des revendications précédentes, ledit outil (16) incorporant des éléments PCD (diamant polycristallin), PCBN (nitrure de bore cubique polycristallin) et/ou CBN (nitrure de bore cubique).
